# EUROPEAN PATENT APPLICATION

(11) **EP 2 869 263 A1**
(43) Date of publication of application: **06.05.2015**
(21) Application number: 13290259.4
(22) Date of filing: 29.10.2013
(51) Int. Cl.: G06T 7/00

(54) **Method and apparatus for generating depth map of a scene**

(71) Applicant: Thomson Licensing, 92130 Issy-les-Moulineaux (FR)
(72) Inventor: Jouet, Pierrick, 35576 Cesson-Sévigné (FR); Alleaume, Vincent, 35576 Cesson-Sévigné (FR); Baillard, Caroline, 35576 Cesson-Sévigné (FR)
(74) Representative: Huchet, Anne

(57) **Abstract**

A method and an apparatus for generating the depth map of a scene are described. The method comprises the steps of: projecting a structured light pattern with homogeneous density onto the scene to obtain a first depth map; segmenting the scene into at least one area based on the depth information in the first depth map; and projecting a structured light pattern with a heterogeneous density onto the scene by adapting the density of the light pattern to the at least one area of the scene to obtain a second depth map of the scene.

## Description

### TECHNICAL FIELD

The present invention generally relates to 3D computer graphics. In particular, the present invention relates to a method and apparatus for generating the depth map of a scene.

### BACKGROUND

In 3D computer graphics, a depth map is an image that contains depth information relating to the distance of the surfaces of objects in a scene from a viewpoint. The depth map is normally a 2D image, which has pixel values corresponding to the distance, e.g., brighter values mean shorter distance, or vice versa.

The depth information contained in the depth map may have several uses. For example, it can be used to simulate the effect of uniformly dense semi-transparent media within a scene, such as fog or smoke.

The Kinect system of Microsoft proposed to use a structured light to build the depth map of a scene. The structured light approach means the process of projecting a known pattern of pixels (often grids or horizontal bars) onto a scene. The way a light pattern deforms when striking the surfaces of the scene allows a vision system to calculate the depth information of the points/objects in the scene.

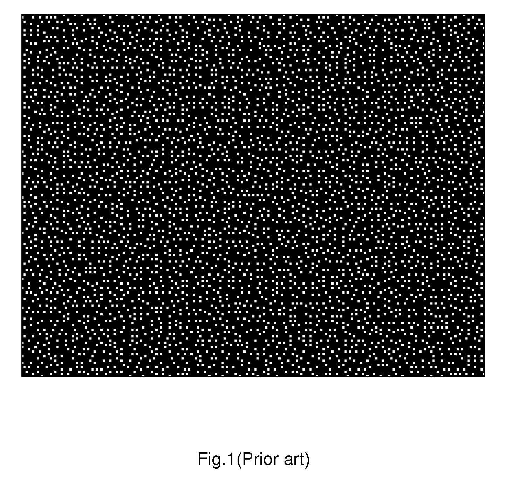

Specifically, in the structured light approach of the Kinect system, there is a light source which projects specifically designed 2D patterns onto a scene. Normally an IR (Infrared Ray) point projection is used for the Kinect system. The projection may be merely a pseudo random layout of points, leading each area of the scene to be lighted by the layout pattern of a unique point. Figure 1 is an exemplary diagram showing a pattern of IR point projection illuminated onto a scene. The scene under illumination will be captured by an image sensor. In a case that the above-mentioned IR point projection is used as the light source, the image sensor may be an IR capture sensor(an IR camera, for example). Each unique pattern will be uniquely identified through images of the IR capture sensor, even in case of alteration coming from the depth changes in the scene area. Depth information is then measured by the shift between the projected and captured patterns through the triangulation principle. In the example of the IR point projection of the Kinect system, the scene with the players is bombarded by non-visible IR light. Part of this radiation will be reflected by all affected surfaces. The amount of reflected IR radiation (referred to the IR camera) depends on the distance of the object. For a farther object is, the amount of reflected infrared radiation will be less. In contrast, for close objects, the amount of reflected infrared radiation will be important. Thus, the IR camera will measure the distance to the object based on intensity.

The structured light approach is now widely used, particularly in the field of cinema.

In the conventional structured light approach for producing the depth map of a scene, the scene is illuminated by a structured light with homogeneous density. For example, objects in the background and foreground of the scene are projected with a pattern with the same density. Then the measured deformation allows the calculation of a depth map as described above.

However, in the conventional structured light approach, a structured light pattern with homogeneous density is projected onto a scene. This means that the same pattern of light, of which the density might be associated to the number of points/objects of a given scene, will be used for all points/objects of the scene, regardless of the distances of objects to a viewpoint. One of the problems of such structured light approach is the precision loss for farthest objects. It can be appreciated that the definition of farthest objects is already worse than for that of closest objects with the homogeneous density projection.

### SUMMARY

In view of the above problem in the conventional technologies, the invention provides a method and apparatus for generating the depth map of a scene, which uses a structured light pattern with a heterogeneous density to project onto the scene. The density of the light pattern is dynamically adapted to at least one area of the scene divided by a depth segmentation as a function of the depth value of the at least one area. The invention can provide a controllable pattern projection with regard to expected depth precision and allow a more detailed analysis during the generation of the depth map of a scene.

According to one aspect of the invention, a method for generating the depth map of a scene is provided. The method comprises the steps of: projecting a structured light pattern with homogeneous density onto the scene to obtain a first depth map; segmenting the scene into at least one area based on the depth information in the first depth map; and projecting a structured light pattern with a heterogeneous density onto the scene by adapting the density of the light pattern to the at least one area of the scene to obtain a second depth map of the scene.

According to one aspect of the invention, an apparatus for generating the depth map of a scene is provided. The method comprises: a pattern projector for projecting a structured light pattern towards a scene; an image sensor for capturing an image of the scene under illumination of the projected structured light pattern; a depth information unit for obtaining the depth information of the scene by measurement of deformation between the projected structured light pattern and the captured light pattern by the image sensor to generate a depth map of the scene; and a control unit for adapting the density of the projected structured light pattern to respective areas of the scene as a function of the average depth values of the areas..

It is to be understood that more aspects and advantages of the invention will be found in the following detailed description of the present invention.

### BRIEF DESCRIPTION OF THE DRAWINGS

The accompanying drawings are included to provide further understanding of the embodiments of the invention together with the description which serves to explain the principle of the embodiments. The invention is not limited to the embodiments.

In the drawings:
Figure 1 is an exemplary diagram showing a pattern of IR point projection illuminated onto a scene;
Figure 2 is a flow chart showing a method for generating the depth map of a scene according to an embodiment of the invention;
Figure 3 is an exemplary diagram showing the structured light pattern with homogeneous density.
Figure 4 is an exemplary diagram showing the output of the depth segmentation with rectangular bounding boxes;
Figure 5 is an exemplary diagram showing a light pattern with adaptive density;
Figure 6(a), (b) and (c) are exemplary diagrams showing the process for generating a depth map of a specific scene; and
Figure 7 is a block diagram of an apparatus for generating the depth map of a scene according to an embodiment of the invention.

### DETAILED DESCRIPTION

An embodiment of the present invention will now be described in detail in conjunction with the drawings. In the following description, some detailed descriptions of known functions and configurations may be omitted for conciseness.

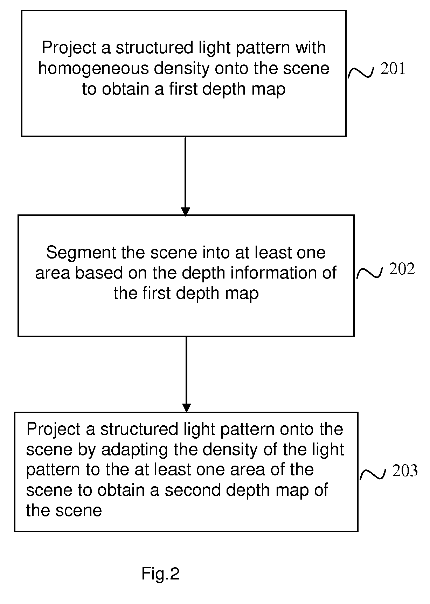

Figure 2 is a flow chart showing a method for generating the depth map of a scene according to an embodiment of the invention.

At step 201, it projects a structured light pattern with homogeneous density onto the scene to obtain a first depth map.

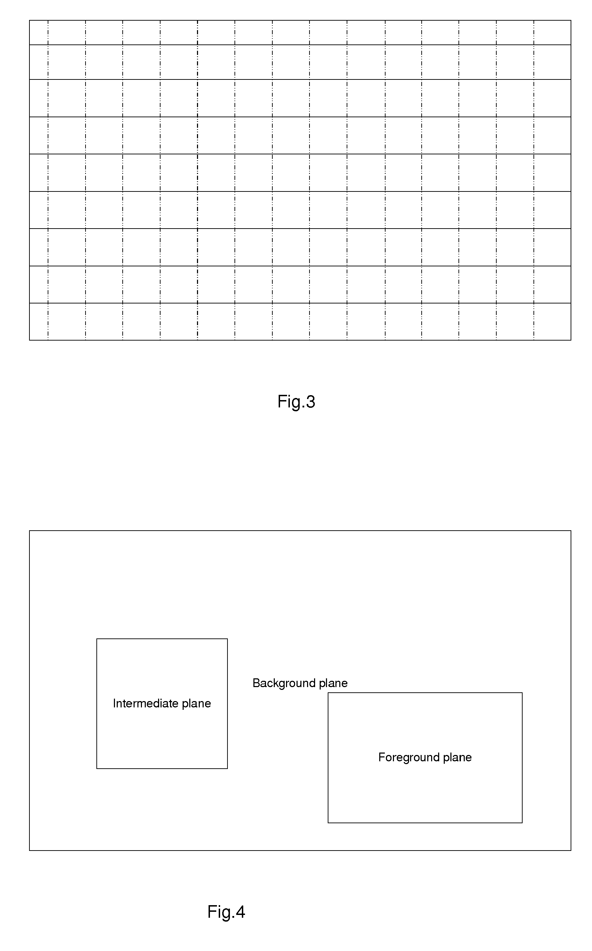

In this step a pattern projector may be used for projecting a structured light pattern towards the scene. Any appropriate lighting source can be used for the pattern projector, including but not limited to an IR projector as described above. In this case, it is appreciated that a light incident from the pattern projector is an IR. The projected pattern can be a layout of points, as described above. Figure 3 is an exemplary diagram showing the structured light pattern with homogeneous density which can be used in the step 201. But it can be appreciated that the pattern can comprise other predetermined shapes.

Deformations of the projected structured light when striking the reflective surface of the scene can be measured by an image obtaining unit. The image obtaining unit could be an image sensor, for example, a camera. In this case, an IR capture sensor is used. The depth information of the scene can be calculated by a measurement of the deformation/shift between the projected structured light pattern and the captured pattern by the image obtaining unit. A first depth map can be generated according to the calculated depth information. It is appreciated that known triangulation algorithms for calculating the depth information according to the captured deformations can be used. No further details will be given in this respect.

At step 202, it segments the scene into at least one area based on the depth information in the first depth map.

The depth information can be the depth values of points of the scene. In this case, the step 202, which can be called depth segmentation hereinafter, may be performed by grouping the points of the scene into a plurality of clusters according to the depth values of the points of the scene provided by the first depth map. A set of points with a same or similar depth value can be grouped into one cluster.

Euclidian distance between points of the scene can be used for the above purpose, that is, to group the points of the scene with a same or similar depth value into clusters. The criteria of Euclidian distance is used to build a cluster, which is built with points having closest distance (di +/- delta). This process can be neighbor constrained to get a homogenous cluster. It can be appreciated that other criteria than Euclidian distance can also be used for the clustering of the points of the scene.

The number of areas to be segmented can be determined according to the complexity of the scene. A parameter relevant to the complexity of the scene can be set by a user. The complexity of the scene may relate to the number and size of the objects in the scene and distance difference between these objects. For example, a scene with lots of objects at different distances is considered to be complex and a scene with small object is also considered to be complex. A scene which is more complex can be segmented into more number of areas.

For example, it can be appreciated that a result of a basic segmentation of a scene based on the depth value is the background area and the foreground area of the scene.

Figure 4 is an exemplary diagram showing an example of the result of the depth segmentation with rectangular bounding boxes. As shown in Figure 4, a scene can be segmented into three areas according to the depth information provided in the first depth map, which are indicated as the foreground plane, the background plane and the intermediate plane. The segmentation can be performed by clustering the points of the scene according to the depth values of these points provided by the first depth map. Points with the same or similar depth values are grouped into one cluster, that is, for one of areas of the foreground plane, the background plane and the intermediate plane. In Figure 4, the scene is segmented into areas defined by rectangular bounding boxes. A rectangular bounding shape is a simple kind of bounding box used for the depth segmentation. But it can be appreciated by a person skilled in the art that other shapes can also be used.

To manage border areas, the resulting foreground region can be enlarged to have a safety margin so that oscillation can be avoided.

For example, the rectangular bounding boxes can be built around segmented blobs, or a morphological erosion of the segmented depth image can be performed.

At step 203, it projects a structured light pattern with a heterogeneous density onto the scene by adapting the density of the light pattern to the at least one area of the scene to obtain a second depth map of the scene.

It can be appreciated that the accuracy of the depth map is dependent on the density of the light pattern. A dense pattern will provide higher accuracy than a sparse pattern.

According to the embodiment of the present invention, the density of the projected light pattern can be locally adapted to respective segmented areas of the scene according to the depth values of the areas. The above depth value for the adaption can be the average value of all or part of the points of an area.

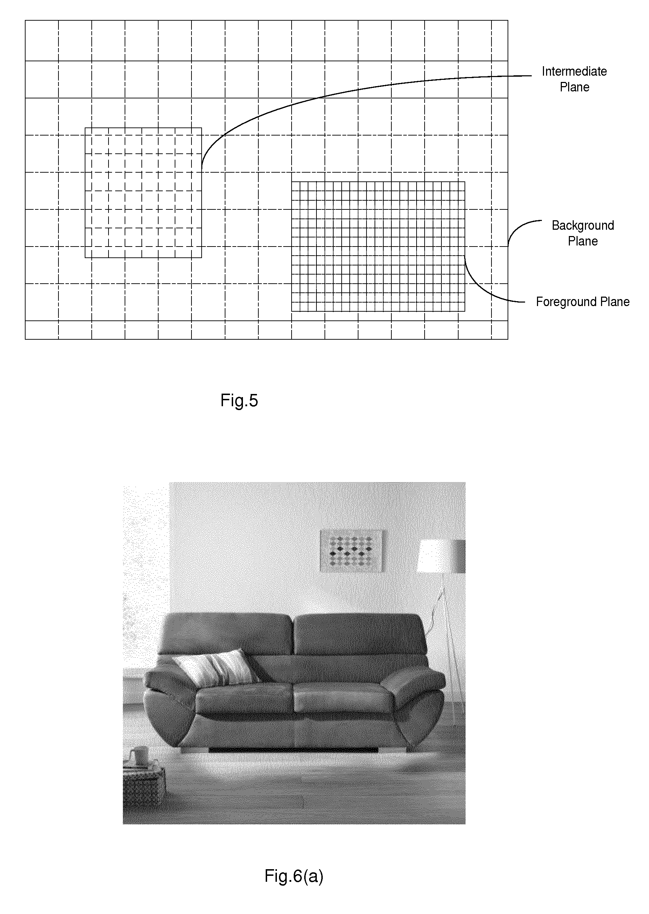

Figure 5 is an exemplary diagram showing a light pattern with adaptive density for the segmented areas shown in Figure 4. As shown in Figure 5, the density of the projected light pattern is adapted to the segmented areas (in this case, the foreground plane, the background plane and the intermediate plane) according to the average depth values of these areas of the first depth map.

It can be appreciated that objects in an area of the scene with smaller average depth values require a better accuracy than those in an area of the scene with larger average depth values. In addition, the background area of a scene will have the largest average depth value and the foreground area of the scene will have the smallest average depth value. Therefore, according to an embodiment of the invention, the density of the projected light pattern can be increased for anyone or all of the segmented areas with smaller average depth values over the background area(those areas are considered to be closer to the viewpoint). In a more specific embodiment, the density of the projected light pattern can be increased only for one of the segmented areas with the smallest average depth value (this area is considered to be the closest one to the viewpoint).

As shown in Figure 5, since the foreground plane and the intermediate plane have smaller average depth values (that is, closer to the view point), the densities of the projected light pattern are increased respectively for these two areas. For the background plane, the density of the projected light pattern can remain unchanged over that of the initial light pattern. It can be appreciated that Figure 5 only shows one example of the density adaption. Other adaption can also be applied. For example, it is also possible to only increase the density of the projected light pattern for the foreground plane, which is the closest area.

In some context, it may need to have a homogeneous scan of the scene. In such case, the density adaption can be performed reciprocally over the above-described example. Specifically, the density of the projected light pattern will be increased respectively for anyone or all of the segmented areas with larger average depth values over the foreground area (those areas are considered to be farther from the viewpoint) and decreased respectively for anyone or all of the segmented areas with smaller average depth values over the background area (those areas are considered to be closer to the viewpoint). More specifically, for the result of the depth segmentation shown in Figure 4, the density of the projected light pattern will be increased for the background plane and decreased for the foreground plane. With such density adaption, a similar accuracy can be achieved in the background and in the foreground (within the limits of the device).

In the method of the embodiment of the present invention, the step 202 of the depth segmentation can be updated at every frame, and the density of the light pattern is adapted accordingly.

For moving objects in the scene, the position of segmented areas can be controlled by a tracking process.

There is a possibility for a new element to enter or leave the capture area. In this case, an inconsistency can be detected, and then the point clustering can be updated accordingly and the density of the light pattern is reviewed to maintain the desired density.

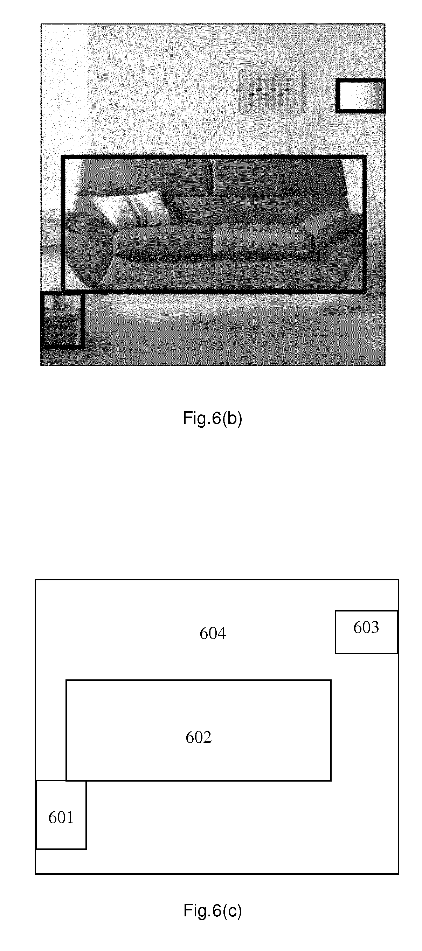

Next, the process for generating a depth map of an exemplary scene will be described with reference to Figures 6(a), 6(b) and 6(c).

Figure 6(a) shows an exemplary scene, of which a depth map will be generated. The scene shows a part of a living room, wherein a floor lamp, a sofa and a coffee table are placed in front of a wall. There is also a picture frame pinned up on the wall.

According to the method of the embodiment of the invention as described above, firstly a first depth map of the scene is generated by projecting a structured light pattern with homogeneous density onto the scene. Then the scene was segmented into several areas based on the depth information of the first depth map. Figure 6(b) shows the depth segmentation of the scene. As shown in Figure 6(b), the scene is segmented into four areas which basically correspond respectively to the floor lamp, the sofa, the coffee table and the background plane, for example, by a clustering of the points of the scene as a function of their depth values available from the first depth map. Since the picture frame on the wall has similar depth values as that of the wall, no additional area is segmented and they are both segmented into the background plane.

Then a structured light pattern with a heterogeneous density is projected onto the scene by adapting the density of the light pattern to the four segmented areas of the scene as according to their depth values, by which a second depth map of the scene was obtained. Figure 6(c) is an exemplary diagram showing the adaption of the density of the light pattern for the segmented areas of the scene. As shown in Figure 6(c), the density of the projected light pattern is locally adapted to the four segmented areas of the scene. As described in the above example, the densities 601, 602 and 603 of the projected light pattern can be increased for anyone or all of the three segmented areas with smaller average depth values (except for the background area) to achieve a better accuracy of the depth map. Alternatively, the density 604 of the projected light pattern can be increased for the background area, and the density 601 is decreased for the foreground area (coffee table) to achieve a similar accuracy in the background and in the foreground of the scene.

With the method according to the embodiment of the present invention, the precision of the depth map for close objects can be increased, or alternatively the depth accuracy over the whole scene can be homogenized. Additionally, compared to a conventional approach with high density patterns, the calculation of the depth map is easier, which will reduce the computation time.

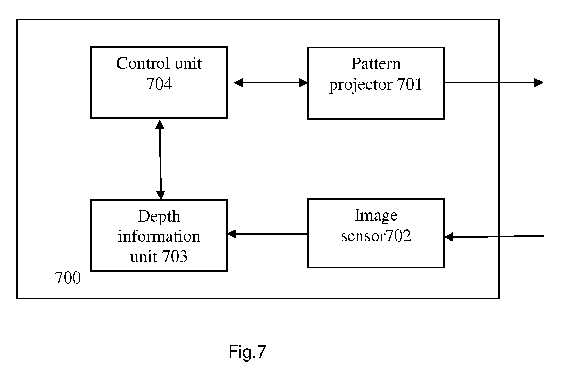

Figure 7 is a block diagram of an apparatus for implementing the method for generating the depth map of a scene according to an embodiment of the invention.

As shown in Figure 7, the apparatus 700 comprises a pattern projector 701 for projecting a structured light pattern towards a scene. As described above, the pattern projector can illuminate any appropriate light, including but not limited to an IR light.

The apparatus 700 comprises an image sensor 702 for capturing an image of the scene under illumination of the projected structured light pattern.

The apparatus 700 further comprises a depth information unit 703 for obtaining the depth information of the scene by measurement of deformation between the projected structured light pattern and the captured light pattern by the image sensor 702 to generate a depth map of the scene.

As shown in Figure 7, the apparatus 700 comprises a control unit 704 for implementing the method of the embodiment of the invention describe above to adapt the density of the projected structured light pattern to respective areas of the scene as a function of the depth values of the areas. Specifically, under the control of the control unit 704, the pattern projector 701 will firstly project a structured light pattern with homogeneous density onto the scene. A first depth map will be generated by the depth information unit 703 by measurement of deformation between the projected structured light pattern and the captured light pattern by the image sensor 702. The control unit 704 segments the scene into at least one area based on the depth information of the first depth map and instructs the pattern projector 701 to project a structured light pattern with a heterogeneous density onto the scene, which is adapted to the at least one area of the scene as a function of the depth value. The depth information unit 703 will generate a second depth map by measurement of deformation between the newly projected structured light pattern and the captured light pattern by the image sensor 702.

It is to be understood that the present invention may be implemented in various forms of hardware, software, firmware, special purpose processors, or a combination thereof, for example, within any one or more of the plurality of 3D display devices or their respective driving devices in the system and/or with a separate server or workstation. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method for generating the depth map of a scene, comprising the steps of:
projecting (201) a structured light pattern with homogeneous density onto the scene to obtain a first depth map;
segmenting (202) the scene into at least one area based on the depth information in the first depth map; and
projecting (203) a structured light pattern with a heterogeneous density onto the scene by adapting the density of the light pattern to the at least one area of the scene to obtain a second depth map of the scene.

2. Method according to claim 1, the depth information is the depth value of a point of the scene.

3. Method according to claim 2, wherein the segmentation comprises grouping the points of the scene into clusters, each of which has a same or similar depth value

4. Method according to claim 3, wherein the grouping is based on the Euclidian distance between the depth values of points of the scene.

5. Method according to claim 1, wherein the density of the light pattern is adapted as a function of the average depth values of the at least one area.

6. Method according to claim 5, wherein the density of the light pattern is increased for anyone or all of the at least one area except for the area with the largest average depth values.

7. Method according to claim 6, the density of the light pattern is increased only for one of the at least one area with the smallest average depth value.

8. Method according to claim 5, wherein the density of the light pattern is increased for anyone or all of the at least one area except for the area with the smallest average depth values and decreased for anyone or all of the at least one area except for the area with the largest average depth value.

9. Method according to claim 8, the density of the projected light pattern is increased for one of the at least one area with the largest average depth value and decreased for one of the at least one area with the smallest average depth value.

10. Method according to claim 1, wherein the scene is segmented into areas which are bounded by rectangular bounding shapes.

11. Method according to claim 1, wherein the number of the segmented areas is set according to the complexity of the scene.

12. Method according to claim 11, the complexity of the scene relates to the number and size of the objects in the scene and distance difference between the objects.

13. An apparatus for generating the depth map of a scene, comprising
a pattern projector (701) for projecting a structured light pattern towards a scene;
an image sensor (702) for capturing an image of the scene under illumination of the projected structured light pattern;
a depth information unit (703) for obtaining the depth information of the scene by measurement of deformation between the projected structured light pattern and the captured light pattern by the image sensor (702) to generate a depth map of the scene; and
a control unit (704) for adapting the density of the projected structured light pattern to respective areas of the scene as a function of the average depth values of the areas.

14. Apparatus according to claim 13, further comprising, under the control of the control unit (704):
the pattern projector (701) projecting a structured light pattern with homogeneous density onto the scene to obtain a first depth map;
the image sensor (702) capturing an image of the scene under illumination of the projected structured light pattern;
the depth information unit (703) obtaining the depth information of the scene to generate a first depth map of the scene;
the control unit (704) segmenting the scene into at least one area based on the depth information of the first depth map and adapting the density of the light pattern to the at least one area of the scene as a function of the depth value;
the pattern projector (701) projecting (203) structured light pattern with an adapted density onto the scene;
the image sensor (702) capturing an image of the scene under illumination of the adapted structured light pattern; and
the depth information unit (703) obtaining the depth information of the scene to generate a second depth map of the scene.

15. Apparatus according to claim 13, wherein the pattern projector (701) is an IR projector and the image sensor (702) is an IR camera.
